# EUROPEAN PATENT APPLICATION

(11) **EP 4 600 843 A1**
(43) Date of publication of application: **13.08.2025**
(21) Application number: 25156736.8
(22) Date of filing: 10.02.2025
(51) Int. Cl.: G06F 16/9032, G06F 16/9532

(54) **SYSTEM AND METHOD FOR GENERATING CALCULATION MODELS**

(30) Priority: 12.02.2024 US 202463552524 P; 31.10.2024 US 202418933768
(71) Applicant: Microsoft Technology Licensing, LLC, Redmond, WA 98052 (US)
(72) Inventor: Schwartz, Jenna L., Redmond, 98052 (US); Bollimpalli, Priyatham, Redmond, 98052 (US); Asokkumar, Karthikeyan, Redmond, 98052 (US); Mallampalli, Devi Kirankanth, Redmond, 98052 (US); Moore, John Andrew, Woodinville, 98052 (US)
(74) Representative: Goddar, Heinz J.

(57) **Abstract**

A computer-implemented method, computer system, and computer program product for generating a calculation model. An input natural language text prompt describing a calculation in a particular domain is received. Using a large language model, a domain-specific language (DSL) version of the input text prompt is generated and the DSL version of the prompt is converted to a JavaScript Object Notation (JSON) form that represents a model of the calculation, resulting in a calculation model, which is output to a user.

## Description

### Background

Calculation models are used to generate data resulting from inputs of certain figures relating to circumstances that are being monitored. Currently, calculation models are generated manually, for example, through the use of a tool that enables a user to select various functions of the model by selecting from a library of functions that may or may not be related to the particular circumstance being monitored. This process is labor intensive and subject to user error, resulting in the use of potentially inappropriate or incorrect functions in connection with the desired calculation model.

### Brief Description of the Drawings

FIG. 1 is a flowchart showing a method of generating a calculation model in accordance with an implementation of the disclosure;
FIG. 2 is a flowchart showing a method of generating a calculation model in accordance with an implementation of the disclosure;
FIG. 3 depicts an example generation of a calculation model in accordance with an implementation of the disclosure;
FIG. 4 depicts an input user interface that may be used in accordance with an implementation of the disclosure;
FIG. 5 depicts an example flow graphic of a calculation model generated in accordance with an implementation of the disclosure; and
FIG. 6 is a diagrammatic view of a computer system and the calculation model generation process coupled to a distributed computing network.

Like reference symbols in the various drawings indicate like elements.

### Detailed Description

As will be discussed in greater detail below, implementations of the present disclosure are directed to generating a calculation model using a large language model, such as the Generative Pre-trained Transformer (GPT) model, to create the calculation model from a text natural language input provided by a user. Implementations of the disclosure are focused on particular domains, meaning that the generation of a calculation model is built to be specialized for a particular purpose. For example, a calculation model generator in accordance with an implementation of the disclosure may be specialized in the generation of calculation models pertaining to sustainability, such as in the environment of emissions, water usage, waste considerations, etc. As is described in greater detail below, this enables the calculation model generator to utilize features and rules specific to that domain, resulting in the generation of more precise models.

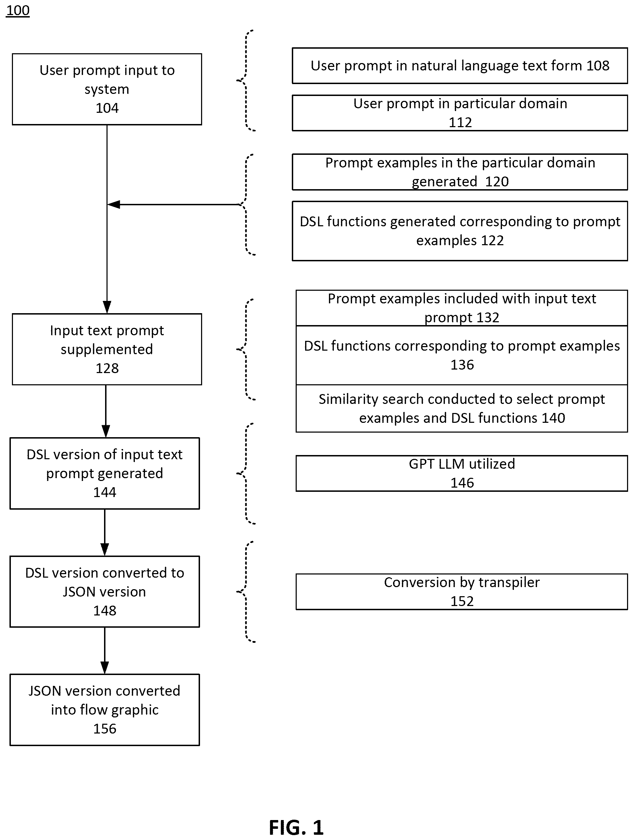

FIG. 1 is a flowchart 100 depicting a method for generating a calculation model in accordance with implementations of the disclosure. The method is enabled in a model that uses prompt engineering in addition to a large language model, such as the Generative Pre-trained Transformer (GPT) model.

Prompt engineering refers to the systematic process of designing and refining prompts or input queries to guide the behavior of language models, particularly large language models (LLMs) like GPT (Generative Pre-trained Transformer). The goal of prompt engineering is to elicit desired responses or outputs from the language model by carefully crafting prompts that provide context, constraints, and cues for the model to generate relevant and coherent text. This may involve iteratively experimenting with different prompt formats, phrasing, and parameters to achieve specific objectives, such as generating accurate answers to questions, completing tasks, or producing desired outputs in various applications. Prompt engineering requires a deep understanding of the underlying language model's capabilities, limitations, and biases, as well as knowledge of the task or domain being addressed. Techniques for prompt engineering may include providing context or background information, specifying constraints or requirements, using example prompts or demonstrations, and refining prompts based on feedback and evaluation.

A large language model (LLM) is a type of artificial intelligence (AI) model that has been trained on vast amounts of text data to understand and generate human-like text. LLMs use deep learning techniques, particularly transformer architectures, to process and analyze large corpora of text, capturing intricate patterns and relationships within the language. These models are capable of tasks such as language understanding, text generation, translation, summarization, and more. One of the most well-known examples of a large language model is OpenAI's GPT model series. These models have been trained on diverse text sources, including books, articles, websites, and other textual data from the internet, enabling them to generate coherent and contextually relevant text in response to prompts or queries. Large language models have a wide range of applications across various industries, including natural language processing, content generation, chatbots, virtual assistants, sentiment analysis, and more.

A calculation model is a structured framework or methodology used to perform mathematical calculations, analyze data, or simulate complex systems. These models are typically developed to solve specific problems, make predictions, or inform decision-making processes in various domains such as finance, engineering, science, and economics. Calculation models can take different forms, including mathematical equations, algorithms, statistical models, simulations, or computational models, depending on the nature of the problem being addressed and the available data and resources. These models may involve mathematical formulas, logical rules, input parameters, and computational algorithms to process data and generate results. Calculation models are often used to forecast future trends, optimize processes, evaluate scenarios, or support evidence-based decision making. They play a critical role in fields such as risk management, investment analysis, engineering design, scientific research, and policy formulation, providing valuable insights and guidance for practitioners and decision makers.

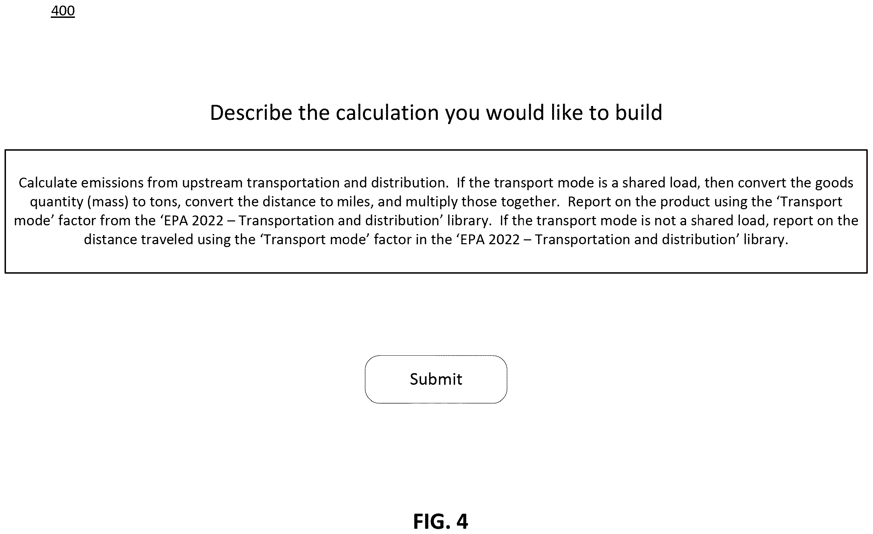

FIG. 1 is a flowchart 100 depicting a method for generating a calculation model in accordance with an embodiment of the disclosure. As shown in FIG. 1, a user prompt is input to a user interface, 104. The user prompt is in the form of natural language text, 108, and is specific to a particular domain in which the system is specifically programmed to handle, 112. For example, FIG. 4 shows a user prompt that describes a scenario involving the calculation of emissions under certain circumstances. As shown, the domain in this example is that of environmental sustainability. Separate from the input prompt submitted by a user, the system is populated with prompt examples, 120, that are generated in the particular domain of which the calculation model generation system specializes, and domain-specific language (DSL) functions that correspond to the prompt examples, 122. These prompt examples are prompts that are expected to be received by the system, given the particular domain. As described below, these prompt examples help to focus the system on the intent of the user, particularly in a case where the user has not formulated the input prompt in a precise and efficient manner.

A domain-specific language (DSL) is a specialized programming language designed to address the needs and requirements of a specific domain or problem space. Unlike general-purpose programming languages like Python or Java, which are intended for a wide range of applications, DSLs are tailored to a particular field, industry, or area of expertise. DSLs provide a higher level of abstraction and expressiveness that closely align with the concepts, terminology, and workflows of the targeted domain, making them more accessible and efficient for users.

When the input text prompt is received, it is supplemented, 128, to enable a more precise calculation model to be generated. This supplementation includes the addition of the prompt examples, 132, and DSL functions, 136. A similarity search, e.g., the Facebook^{®} artificial intelligence (AI) Similarity Search (FAISS) (i.e., a library that allows developers to quickly search for embeddings of multimedia documents that are similar to each other) is conducted, 140, from the input text prompt to identify prompt examples and DSL functions that help to further define the prompt input by the user. The supplemented input prompt is then processed, 144, to generate a DSL version of the input text prompt using the GPT large language model, 146. Once the DSL version of the input text prompt is generated, 144, the DSL version is converted to a JSON format, 148, by a transpiler 152 (i.e., a source-to-source translator that takes the source code of a program written in a programming language as its input and produces an equivalent source code in the same or a different programming language). JSON (JavaScript Object Notation) is a lightweight, text-based data format used for representing structured data. JSON structures data in key-value pairs, arrays, and nested objects, using simple syntax rules. Although JSON originated from JavaScript, it is language-independent and supported by most programming languages, making it a versatile format for APIs, configuration files, and data storage. In an embodiment, the JSON version represents the calculation model resulting from the prompt input by the user. The JSON version can then be converted to a flow graphic for the user showing the steps carried out by each function of the calculation model.

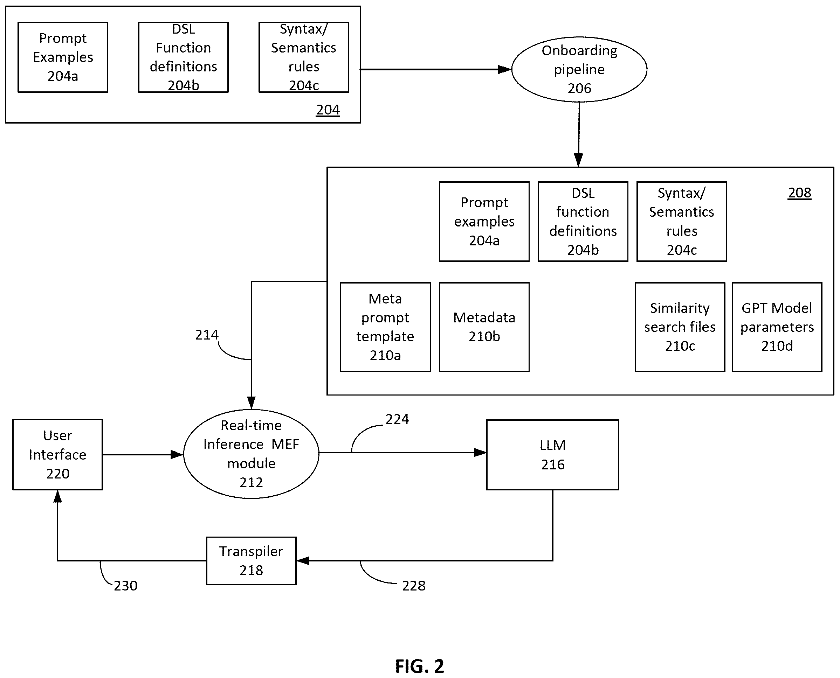

FIG. 2 is a flowchart 200 depicting a further implementation of the disclosure. At 204, prior to a prompt being input to the calculation model generation system, prompt examples 204a, DSL function definitions 204b, and syntax and semantics rules 204c are generated to help fine tune the generation of calculation models based on prompts input by a user. A prompt example can include specific inputs or instructions given to a language model to guide its response in a particular domain. A DSL function definition refers to the creation of a function within a specialized programming language tailored for a particular domain. Since a DSL is designed to provide more concise and expressive syntax for specific areas like web development, database queries, or configuration management, a DSL function definition outlines the behavior and operations that the function will perform within the context of the domain. Syntax and semantics rules refer to the underlying principles that guide how the model understands and generates language. These are uploaded, through an onboarding pipeline 206, to static file depository, 208. Onboarding pipeline 206 is in the form of a systematic process that integrates new or modified input data sources, devices, or configurations into an existing system or workflow. This pipeline is designed to ensure that the updated inputs-whether they are new hardware devices, software inputs, or updated data formats-are properly recognized, validated, and optimized for use within the system. The pipeline typically includes several stages, such as data preprocessing, validation, transformation, and testing, to ensure that the updated inputs align with the system's requirements and do not disrupt ongoing operations. During the onboarding process, the pipeline first assesses the compatibility of the new inputs with the system's existing architecture, which might involve mapping new data formats or ensuring that new devices communicate effectively with other system components. Validation checks are performed to verify the accuracy and integrity of the input data. Transformation steps may be applied to standardize the inputs, converting them into formats that the system can efficiently process. Finally, thorough testing is conducted to ensure that the new inputs perform as expected and integrate smoothly with the rest of the system.

Other information, such as meta prompt template 210a, metadata 210b, similarity search files 210c, and GPT model parameters 210d are also stored in static file depository 208. A meta prompt template 210a is a higher-level structure or framework used to guide the creation of prompts in NLP tasks, particularly in large language models. It serves as a blueprint that dictates how specific prompts should be formulated to achieve consistent and effective outcomes across various tasks. The meta prompt template typically includes placeholders or guidelines that are filled with specific details relevant to the task at hand. By using a meta prompt template, the process of crafting prompts can be standardized, ensuring that they align with best practices for eliciting the desired behavior from the model. This method improves consistency, clarity, and performance in tasks ranging from text generation and summarization to problem-solving and decision-making, making it easier to scale and optimize the use of language models across different applications.

A similarity search file 210c is a data file or structure designed to facilitate similarity-based searches, where the goal is to retrieve items that are closely related to a given query based on specific characteristics. The file typically contains representations of data objects (such as vectors, embeddings, or feature sets) that allow for efficient comparison of similarities between the query and the stored items. This file might store numerical representations that encode the features of the objects. During a search, algorithms compare these representations to find the closest matches. The similarity search file is optimized to handle complex queries and large datasets by using indexing techniques, such as locality-sensitive hashing or k-nearest neighbors (k-NN), enabling fast and accurate retrieval of relevant items. It can be used in applications where exact matches are rare, and the focus is on finding data that closely resembles the input query.

GPT model parameters 210d are internal variables that define the behavior and learning capacity of a GPT model. These parameters include the weights and biases of the model, which are adjusted during the training process to help the model learn patterns in data. The parameters are distributed across multiple layers of the neural network and determine how the model processes input data, such as text, and generates responses. In the case of GPT models, these variables allow the model to capture complex relationships between words, phrases, and concepts, enabling it to produce coherent and contextually relevant text. The size and configuration of the parameters directly influence the model's ability to understand and generate human-like language, with larger models generally having more sophisticated capabilities due to their greater number of parameters.

When a prompt is input by a user at user interface 220 the prompt is input to a real-time inference module execution framework (MEF) 212. A real-time inference module execution framework is a system designed to support the efficient and rapid execution of machine learning models or algorithms in real-time. The framework typically includes components for receiving input data streams, preprocessing data, executing inference modules, and generating output responses. This framework orchestrates the execution of inference modules, which are responsible for making predictions or decisions based on input data using pre-trained models. It handles the entire pipeline, from receiving data inputs, processing them through the model, and delivering outputs, all within strict time constraints. The framework ensures that the inference happens with minimal latency while managing resources like memory and computational power to maintain performance at scale. By optimizing the flow and execution of inference tasks, the framework enables applications to make fast, accurate decisions based on live data, ensuring responsiveness and reliability in dynamic environments.

MEF 212 receives the input prompt and reads, 214, information 204a, 204b, 204c, 210a, 210b, 210c, and/or 210d from depository 208 to modify the input prompt to improve its context to create the final prompt. From this information, relevant examples are determined based on the user prompt to include in the final prompt and relevant DSL functions are determined to be included in the final prompt.

The modified user prompt is included in the final prompt, which is then input, 224, to the GPT LLM, 216. In an embodiment, the LLM 216 uses a conversational AI platform interface (CAPI) in the generation of a DSL version of the final prompt 228. As discussed above, the DSL version of the final prompt is converted by transpiler 218 into a JSON flow graphic format 230 which represents the calculation model.

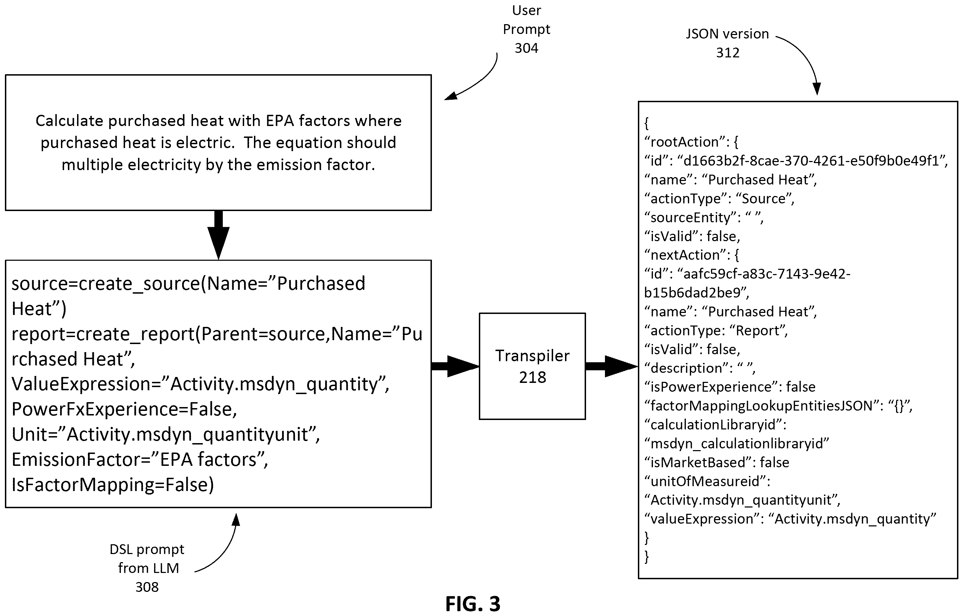

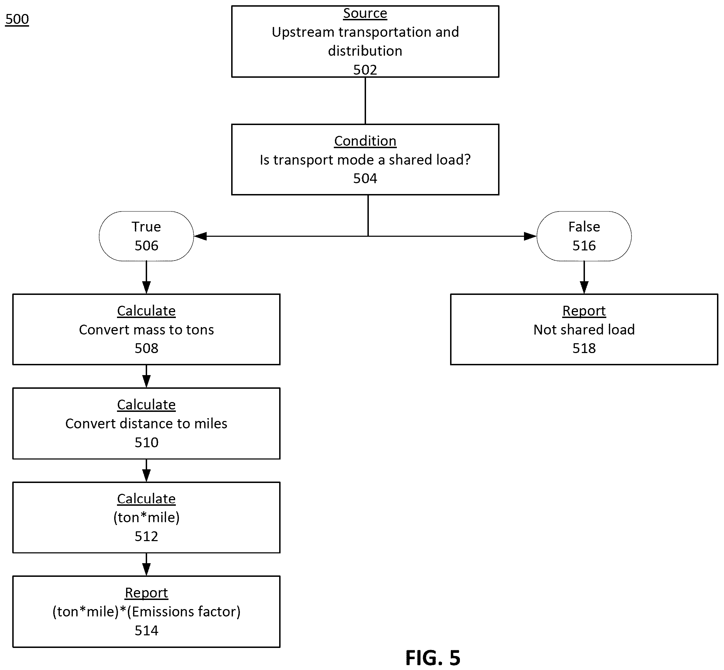

FIG. 3 depicts the conversion 300 of an example input prompt to a JSON format representing the calculation model generated from the input prompt according to an embodiment of the disclosure. As shown, the user input prompt 304 is "Calculate purchased heat with EPA factors where purchased heat is electric. The equation should multiply electricity by the emission factor." As discussed above with reference to FIGs. 1 and 2, the input prompt 304 is converted, with the use of the GPT LLM, to a DSL version, shown at 308. This DSL version is then converted by transpiler 218 into a JSON version 312, which represents the desired calculation model. The JSON version of the calculation model is then converted to a flow diagram, an example of such a flow diagram 500 being shown in FIG. 5.

FIG. 4 depicts another example input prompt setting forth particular functions for which a calculation model is to be generated. After executing the method described above and shown in FIGs. 1 and 2, a flow graphic, such as shown in FIG. 5 may be generated from the JSON version resulting from the above method. This represents the calculation model generated based on the input prompt shown in FIG. 4.

Shown in FIG. 5 is flow diagram 500, which represents the output of the system and method of FIGS. 1 and 2 when the prompt 400 of FIG. 4 is processed. The source of the data, 502, is "upstream transportation and distribution." The condition, 504, of the calculation model is whether the transport mode is a shared load. If true, 506, certain calculations are performed and a report is issued. At 508, the mass of the goods being transported is converted to tons, at 510, the distance traveled is converted to miles, at 512 the product of tons and miles is determined, and at 514 a report is generated showing the ton/mile product as it related to the emissions factor specified in the prompt. If the load is not a shared load, 516, a report is generated indicating such, 518.

Accordingly, implementations of the disclosure enable the automatic generation of a calculation model using a large language model to generate a DSL version of a text prompt input by a user, which is then converted to a JSON version, which represents the desired calculation model. While implementations of the disclosure have been described with reference to use f the GPT LLM, it will be understood that any suitable LLM may be used in connection with the generation of a calculation model according to the disclosed implementations. Further, while implementations have been described in the context of a sustainability-focused domain, it will be understood that calculation models for any discipline may be generated by implementations of the disclosure. In any target domain, the example prompts, DSL functions, and syntax and semantics rules would be generated to be specific to the target domain.

### System Overview:

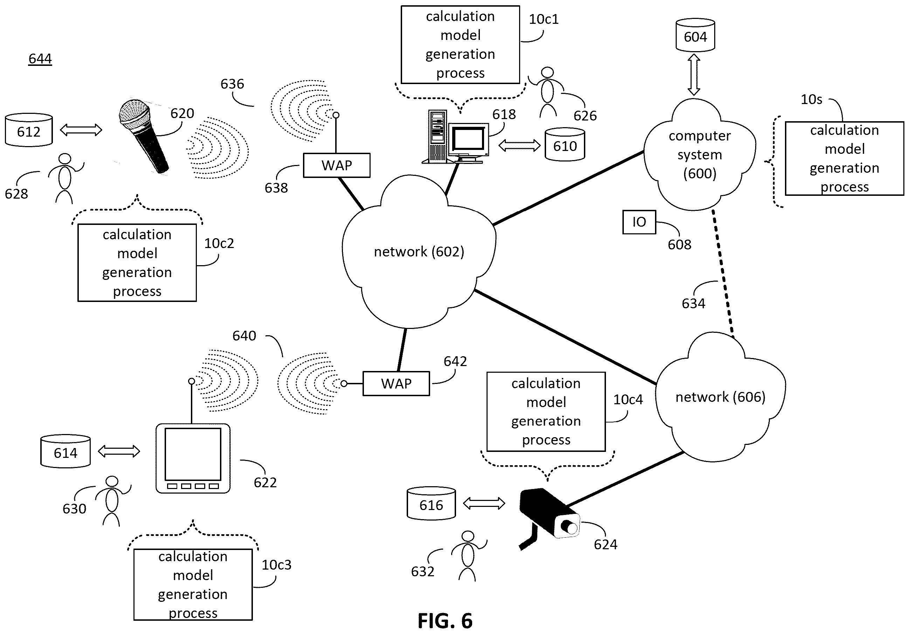

Referring to FIG. 6, there is shown a calculation model generation process 10. Calculation model generation process 10 may be implemented as a server-side process, a client-side process, or a hybrid server-side / client-side process. For example, calculation model generation process 10 may be implemented as a purely server-side process via calculation model generation process 10s. Alternatively, calculation model generation process 10 may be implemented as a purely client-side process via one or more of calculation model generation process 10c1, calculation model generation process 10c2, calculation model generation process 10c3, and calculation model generation process 10c4. Alternatively still, calculation model generation process 1044 may be implemented as a hybrid server-side / client-side process via calculation model generation process 10s in combination with one or more of calculation model generation process 10c1, calculation model generation process 10c2, calculation model generation process 10c3, and calculation model generation process 10c4.

Accordingly, calculation model generation process 10 as used in this disclosure may include any combination of calculation model generation process 10, calculation model generation process 10c1, calculation model generation process 10c2, calculation model generation process 10c3, and calculation model generation process 10c4.

Calculation model generation process 10s may be a server application and may reside on and may be executed by a computer system 600, which may be connected to network 602 (e.g., the Internet or a local area network). Computer system 600 may include various components, examples of which may include but are not limited to: a personal computer, a server computer, a series of server computers, a mini computer, a mainframe computer, one or more Network Attached Storage (NAS) systems, one or more Storage Area Network (SAN) systems, one or more Platform as a Service (PaaS) systems, one or more Infrastructure as a Service (IaaS) systems, one or more Software as a Service (SaaS) systems, a cloud-based computational system, and a cloud-based storage platform.

A SAN includes one or more of a personal computer, a server computer, a series of server computers, a minicomputer, a mainframe computer, a RAID device and a NAS system. The various components of computer system 600 may execute one or more operating systems.

The instruction sets and subroutines of computational cost reduction process 10s, which may be stored on storage device 604 coupled to computer system 600, may be executed by one or more processors (not shown) and one or more memory architectures (not shown) included within computer system 600. Examples of storage device 604 may include but are not limited to: a hard disk drive; a RAID device; a random-access memory (RAM); a read-only memory (ROM); and all forms of flash memory storage devices.

Network 602 may be connected to one or more secondary networks (e.g., network 604), examples of which may include but are not limited to: a local area network; a wide area network; or an intranet, for example.

Various IO requests (e.g., IO request 608) may be sent from calculation model generation process 10s, calculation model generation process 10c1, calculation model generation process 10c2, calculation model generation process 10c3 and/or calculation model generation process 10c4 to computer system 600. Examples of IO request 608 may include but are not limited to data write requests (i.e., a request that content be written to computer system 600) and data read requests (i.e., a request that content be read from computer system 600).

The instruction sets and subroutines of calculation model generation process 10c1, calculation model generation process 10c2, calculation model generation process 10c3 and/or computational cost reduction process 10c4, which may be stored on storage devices 610, 612, 614, 616 (respectively) coupled to client electronic devices 618, 620, 622, 624 (respectively), may be executed by one or more processors (not shown) and one or more memory architectures (not shown) incorporated into client electronic devices 618, 620, 622, 624 (respectively). Storage devices 610, 612, 614, 616 may include but are not limited to: hard disk drives; optical drives; RAID devices; random access memories (RAM); read-only memories (ROM), and all forms of flash memory storage devices. Examples of client electronic devices 618, 620, 622, 624 may include, but are not limited to, personal computing device 618 (e.g., a smart phone, a personal digital assistant, a laptop computer, a notebook computer, and a desktop computer), audio input device 620 (e.g., a handheld microphone, a lapel microphone, an embedded microphone (such as those embedded within eyeglasses, smart phones, tablet computers and/or watches) and an audio recording device), display device 622 (e.g., a tablet computer, a computer monitor, and a smart television), a hybrid device (e.g., a single device that includes the functionality of one or more of the above-references devices; not shown), an audio rendering device (e.g., a speaker system, a headphone system, or an earbud system; not shown), and a dedicated network device (not shown).

Users 626, 628, 630, 632 may access computer system 600 directly through network 602 or through secondary network 606. Further, computer system 600 may be connected to network 602 through secondary network 606, as illustrated with link line 634.

The various client electronic devices (e.g., client electronic devices 618, 620, 622, 624) may be directly or indirectly coupled to network 602 (or network 606). For example, personal computing device 618 is shown directly coupled to network 602 via a hardwired network connection. Further, machine vision input device 624 is shown directly coupled to network 606 via a hardwired network connection. Audio input device 622 is shown wirelessly coupled to network 602 via wireless communication channel 636 established between audio input device 620 and wireless access point (i.e., WAP) 638, which is shown directly coupled to network 602. WAP 638 may be, for example, an IEEE 802.11a, 802.11b, 802.11g, 802.11n, Wi-Fi, and/or any device that is capable of establishing wireless communication channel 636 between audio input device 620 and WAP 638. Display device 622 is shown wirelessly coupled to network 602 via wireless communication channel 640 established between display device 622 and WAP 642, which is shown directly coupled to network 602.

The various client electronic devices (e.g., client electronic devices 618, 620, 622, 624) may each execute an operating system, wherein the combination of the various client electronic devices (e.g., client electronic devices 618, 620, 622, 624) and computer system 600 may form modular system 644.

### General:

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

## Claims

1. A computer-implemented method, executed on a computing device, comprising:
receiving an input natural language text prompt describing a calculation in a particular domain;
generating a domain-specific language (DSL) version of the input text prompt using a large language model;
converting the DSL version of the input text prompt to a JavaScript Object Notation (JSON) form that represents a model of the calculation, resulting in a calculation model; and
outputting the calculation model.

2. The computer-implemented method of claim 1, wherein the large language model comprises a Generative Pre-trained Transformer (GPT) model.

3. The computer-implemented method of claim 1 or 2, further comprising:
supplementing the input text prompt using prompt engineering.

4. The computer-implemented method of claim 3, further comprising:
generating an example of a type of prompt expected in the particular domain, resulting in a prompt example.

5. The computer-implemented method of claim 4, wherein the prompt example is included with the input text prompt when generating the DSL version of the input text prompt.

6. The computer-implemented method of one of the claims 3 to 5, wherein supplementing includes performing a similarity search to select an example of a type of prompt to include with the input text prompt.

7. The computer-implemented method of claim 6, further comprising:
generating a DSL function corresponding to the prompt example,
wherein preferably
generating the DSL version of the input text prompt includes generating the DSL version of the input text prompt using the similarity search to identify a prompt example and the DSL function corresponding to the prompt example.

8. The computer-implemented method of one of the preceding claims, further comprising:
converting the JSON form into a flow graphic depicting steps included in the calculation model,
or
further comprising:
applying at least one of syntax and semantics rules to the input text prompt to optimize the generation of the DSL version of the input text prompt.

9. A computing system comprising:
a memory; and
a processor to:
receive an input natural language text prompt describing a calculation in a particular domain;
generate an example of a type of prompt expected in the particular domain, resulting in a prompt example;
generate a domain-specific language (DSL) version of the input text prompt using a large language model;
convert the DSL version of the input text prompt to a JavaScript Object Notation (JSON) form that represents a model of the calculation, resulting in a calculation model; and
outputting the calculation model.

10. The computing system of claim 9, wherein the large language model comprises the Generative Pre-trained Transformer (GPT) model.

11. The computing system of claim 9 or 10, further comprising:
supplementing the input text prompt using prompt engineering.

12. The computing system of claim 11, wherein supplementing includes performing a similarity search to select examples of types of prompts to include with the input text prompt.

13. The computing system of one of the claims 9 to 12, wherein generating the DSL version of the input text prompt includes generating the DSL version of the input text using the prompt example with the input text prompt.

14. The computing system of one of the claims 9 to 13, further comprising:
converting the JSON form into a flow graphic depicting steps included in the calculation model,
and/or
further comprising:
applying at least one of syntax and semantics rules to the input text prompt to optimize the generation of the DSL version of the input text prompt,
and/or
further comprising:
generating a DSL function corresponding to at least one of the prompt examples.

15. A computer program product residing on a non-transitory computer readable medium having a plurality of instructions stored thereon which, when executed by a processor, cause the processor to perform operations comprising:
receiving an input natural language text prompt describing a calculation in a particular domain;
generating examples of types of prompts expected in the particular domain, resulting in prompt examples;
supplementing the input text prompt using prompt engineering;
using a large language model, generating a domain-specific language (DSL) version of the input text prompt;
converting the DSL version of the input text prompt to a JavaScript Object Notation (JSON) form that represents a model of the calculation, resulting in a calculation model; and
outputting the calculation model,
wherein preferably the large language model comprises the Generative Pre-trained Transformer (GPT) model.
